# FASCICULE DE BREVET EUROPEEN

(11) **EP 2 936 595 B1**
(45) Date de publication et mention de la délivrance du brevet: **07.12.2016**
(21) Numéro de dépôt: 13826876.8
(22) Date de dépôt: 18.12.2013
(51) Int. Cl.: H01M 8/0273, H01M 8/0282, H01M 8/12, C25B 1/10, C25B 1/12, C25B 9/08

(54) **CADRE D'ISOLATION ÉLECTRIQUE ET D'ÉTANCHÉITÉ POUR RÉACTEUR D'ÉLECTROLYSE DE L'EAU (SOEC) OU PILE À COMBUSTIBLE (SOFC)**
ELEKTRISCHER ISOLIERUNGS- UND DICHTUNGSRAHMEN FÜR EINEN WASSERELEKTROLYSEREAKTOR (SOEC) ODER EINE BRENNSTOFFZELLE (SOFC)
SEALING FRAME PROVIDING ELECTRIC INSULATION FOR A WATER ELECTROLYSIS REACTOR (SOEC) OR A FUEL CELL (SOFC)

(30) Priorité: 21.12.2012 FR 1262611
(43) Date de publication de la demande: 28.10.2015
(73) Titulaire: Commissariat à l'Énergie Atomique et aux Énergies Alternatives, 75015 Paris (FR)
(72) Inventeur: PLANQUE, Michel, Seyssins (FR); DI IORIO, Stéphane, F-38250 Lans-en-vercors (FR); REYTIER, Magali, F-38250 Villard De Lans (FR); SZYNAL, Philippe, F-73800 Chignin (FR)
(74) Mandataire: Nony
(86) Numéro de dépôt international: PCT/IB2013/061109
(87) Numéro de publication internationale: WO 2014/097191

(56) Documents cités:
- WO-A1-2011/148769
- US-A1- 2002 106 548
- US-A1- 2004 048 140
- US-A1- 2004 241 544

## Description

### Domaine technique

La présente invention concerne le domaine des piles à combustibles à oxydes solides (SOFC, acronyme anglais pour « Solid Oxide Fuel Cell ») et celui de l'électrolyse de l'eau à haute température (EHT, ou EVHT pour électrolyse de la vapeur d'eau à haute température, ou HTE acronyme anglais pour High Temperature Electrolysis, ou encore HTSE acronyme anglais pour High Temperature Steam Electrolysis) également à oxydes solides (SOEC, acronyme anglais pour « Solid Oxide Electrolyte Cell ».

L'invention a trait plus particulièrement à la réalisation d'un nouveau cadre d'isolation électrique et d'étanchéité pour la distribution des gaz au sein d'un réacteur d'électrolyse de l'eau à haute température (EHT) de type SOEC pour produire de l'hydrogène H2 à partir de vapeur d'eau H2O, ou d'une pile à combustible de type SOFC, à empilement de cellules électrochimiques élémentaires.

Bien que décrite en référence principalement à l'application d'électrolyse de l'eau à haute température, l'invention s'applique toute aussi bien à une pile à combustible SOFC.

### Art antérieur

Une pile à combustible de type SOFC est décrite dans le document WO2011/148769.

L'électrolyse de l'eau est une réaction électrolytique qui décompose l'eau en dioxygène et dihydrogène gazeux avec l'aide d'un courant électrique selon la réaction: H₂O→H₂ + ½ O₂.

Pour réaliser l'électrolyse de l'eau, il est avantageux de la réaliser à haute température typiquement entre 600 et 950°C, car une partie de l'énergie nécessaire à la réaction peut être apportée par la chaleur qui est moins chère que l'électricité et l'activation de la réaction est plus efficace à haute température et ne nécessite pas de catalyseur. Pour mettre en oeuvre l'électrolyse à haute température, il est connu d'utiliser un électrolyseur de type SOEC (acronyme anglais de *« Solid Oxyde Electrolyte Cell »),* constitué d'un empilement de motifs élémentaires comportant chacun une cellule d'électrolyse à oxydes solides, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau H2O dans le compartiment cathodique Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène H2 et des ions oxygène. Le d'hydrogène est collecté et évacué en sortie de compartiment à hydrogène. Les ions oxygène O²⁻ migrent à travers l'électrolyte et se recombinent en dioxygène à l'interface entre l'électrolyte et l'électrode à oxygène (anode).

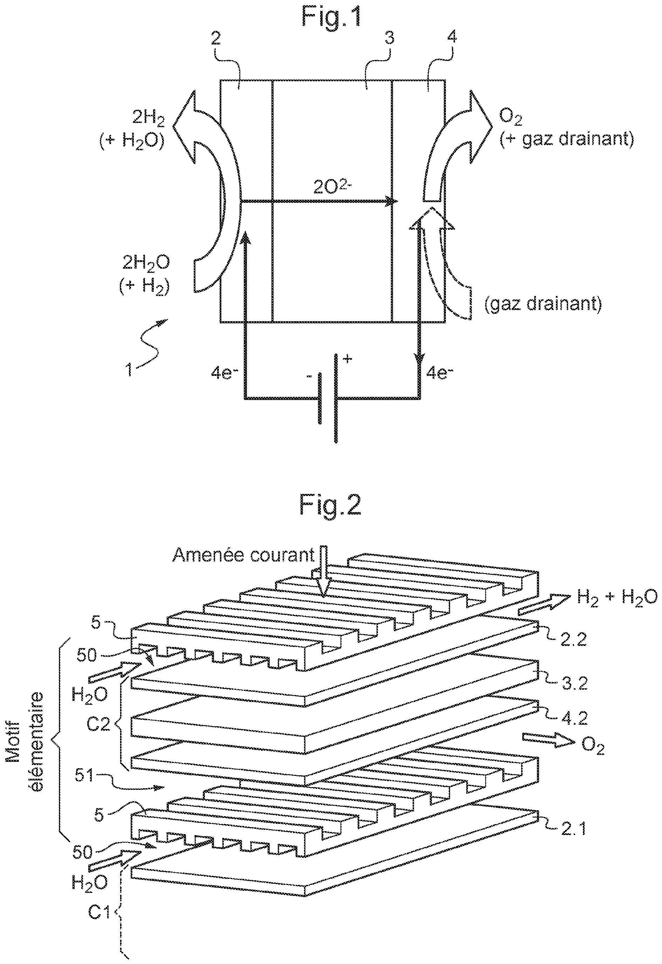

Comme schématisée en figure 1, chaque cellule d'électrolyse élémentaire 1 est formée d'une cathode 2 et d'une anode 4, placées de part et d'autre d'un électrolyte solide 3 généralement sous forme de membrane. Les deux électrodes (cathode et anode) 2,4 sont des conducteurs électroniques, en matériau poreux, et l'électrolyte 3 est étanche au gaz, isolant électronique et conducteur ionique. L'électrolyte peut être en particulier un conducteur anionique, plus précisément un conducteur anionique des ions O²⁻ et l'électrolyseur est alors dénommé électrolyseur anionique.

Les réactions électrochimiques se font à l'interface entre chacun des conducteurs électroniques et le conducteur ionique.

A la cathode 2, la demi-réaction est la suivante :

2H₂O+4e⁻→2H₂+2O²⁻.

A l'anode 4, la demi-réaction est la suivante:

2O²⁻ → O₂+ 4 e⁻.

L'électrolyte 3 intercalé entre les deux électrodes 2, 4 est le lieu de migration des ions O²⁻, sous l'effet du champ électrique créé par la différence de potentiel imposée entre l'anode 4 et la cathode 2.

Comme illustré entre parenthèses en figure 1, la vapeur d'eau en entrée de cathode peut être accompagnée d'hydrogène H2 et l'hydrogène produit et récupéré en sortie peut être accompagné de vapeur d'eau. De même, comme illustré en pointillés, un gaz drainant, tel que l'air peut en outre être injecté en entrée pour évacuer l'oxygène produit. L'injection d'un gaz drainant a pour fonction supplémentaire de jouer le rôle de régulateur thermique.

Un réacteur d'électrolyse élémentaire est constitué d'une cellule élémentaire telle que décrite ci-dessus, avec une cathode 2, un électrolyte 3, et une anode 4 et de deux connecteurs mono-polaires qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des dispositifs d'interconnexion, usuellement appelés interconnecteurs ou plaques d'interconnexion bipolaires. L'ensemble est positionné entre deux plaques d'interconnexion d'extrémité qui supportent les alimentations électriques et des alimentations en gaz de l'électrolyseur (réacteur d'électrolyse).

Un électrolyseur de l'eau à haute température (EHT) comprend ainsi au moins une, généralement une pluralité de cellules d'électrolyse empilées les unes sur les autres, chaque cellule élémentaire étant formée d'un électrolyte, d'une cathode et d'une anode, l'électrolyte étant intercalé entre l'anode et la cathode.

Les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, un compartiment dit cathodique a pour fonction la distribution du courant électrique et de la vapeur d'eau ainsi que la récupération de l'hydrogène à la cathode en contact.

Un compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur de vapeur d'eau à haute température selon l'état de l'art. Cet électrolyseur EHT comporte une pluralité de cellules d'électrolyse élémentaires Cl, C2... de type à oxydes solides (SOEC) empilées alternativement avec des interconnecteurs 5. Chaque cellule C1, C2... est constituée d'une cathode 2.1, 2.2,... et d'une anode 4.1, 4.2, entre desquelles est disposé un électrolyte 3.1, 3.2.... L'ensemble des cellules d'électrolyse est alimenté en série par le courant électrique et en parallèle par les gaz.

L'interconnecteur 5 est un composant en alliage métallique qui assure la séparation entre les compartiments cathodique 50 et anodique 51, définis par les volumes compris entre l'interconnecteur 5 et cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. Le collectage de l'hydrogène produit et de la vapeur d'eau résiduelle à la cathode 2.1, 2.2 ... est effectué dans le compartiment cathodique 50 en aval de la cellule Cl, C2... après dissociation de la vapeur d'eau. Le collectage de l'oxygène produit à l'anode 4.2 est effectué dans le compartiment anodique 51 en aval de la cellule C1, C2...

L'interconnecteur 5 assure le passage du courant entre les cellules C1 et C2 par contact direct avec les électrodes adjacentes, c'est-à-dire entre l'anode 4.2 et la cathode 2.1.

Dans une pile à combustible à oxydes solides SOFC selon l'état de l'art, les cellules C1, C2... et interconnecteurs 5 utilisés sont les mêmes composants, mais le fonctionnement est inverse de celui d'un électrolyseur EHT tel qui vient d'être expliqué avec un sens du courant inversé, et avec de l'air qui alimente les compartiments cathodiques et de l'hydrogène en tant que combustible qui alimente les compartiments anodiques.

Un fonctionnement satisfaisant d'un électrolyseur EHT nécessite entre autres les fonctions essentielles suivantes:
A/ une bonne isolation électrique entre deux interconnecteurs adjacents dans l'empilement, sous peine de court-circuiter la cellule d'électrolyse élémentaire intercalée entre les deux interconnecteurs,
B/ une bonne étanchéité entre les deux compartiments distincts, i.e. anodique et cathodique, sous peine de recombinaison des gaz produits entraînant une baisse de rendement et surtout l'apparition de points chauds endommageant l'électrolyseur,
C/ une bonne distribution des gaz à la fois en entrée et en récupération des gaz produits, sous peine de perte de rendement, d'inhomogénéité de pression et de température au sein des différentes cellules élémentaires voire de dégradations rédhibitoires des cellules,
D/ un bon contact électrique et une surface de contact suffisante entre chaque cellule et interconnecteur, afin d'obtenir la plus faible résistance ohmique entre cellules et interconnecteurs.

Les hautes températures compliquent considérablement la réalisation des trois fonctions essentielles A/ à C/ précitées. En outre, la fragilité des cellules à oxydes solides impose certaines règles de conception contraignantes de manière à garantir leur intégrité mécanique.

Différentes conceptions existent déjà pour réaliser simultanément ces trois fonctions A/ à C/. Ces différentes conceptions sont conditionnées par le choix du type d'alimentation et récupération en gaz de l'ensemble des cellules de l'électrolyseur.

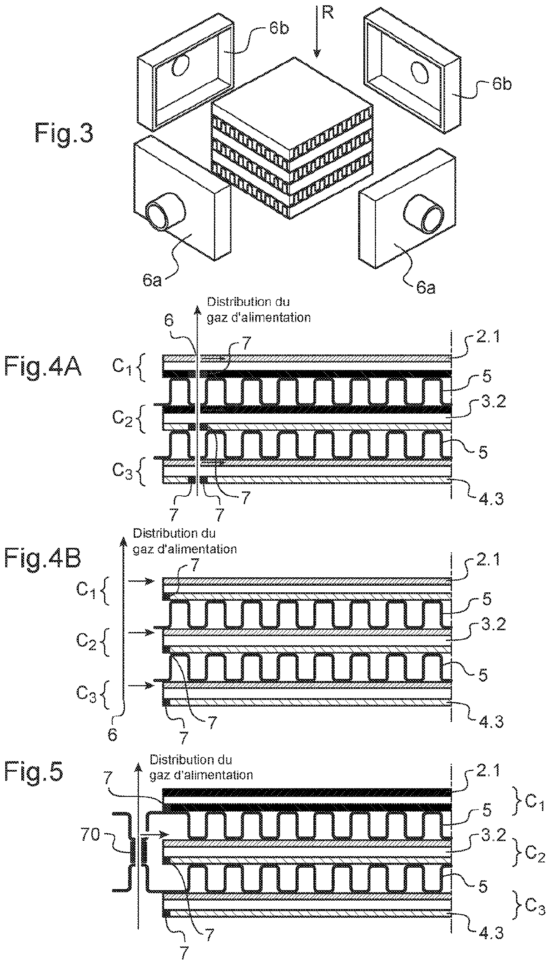

Un premier type connu d'alimentation et de récupération des gaz consiste en une alimentation et récupération en gaz d'une cellule à l'autre par l'extérieur du réacteur. Ce premier type, généralement connu sous l'appellation en anglais « *external manifold*» est illustré de manière schématique en figure 3 : des collecteurs d'alimentation 6 et de récupération 6' sont agencés autour de l'empilement de cellules du réacteur R en formant un boitier. Dans ce premier type d'alimentation et récupération en gaz, toutes les cellules d'électrolyse sont alimentées de manière identique, ce qui satisfait pleinement la fonction C/ précitée. En outre, chaque cellule d'électrolyse ayant sensiblement les mêmes dimensions planaires que les interconnecteurs, cela a pour avantage d'éviter les risques de court-circuit au sein de l'électrolyseur. Les risques de court-circuit dépendent plutôt de la nature des collecteurs externes ainsi que du type d'étanchéités réalisées en périphérie de l'empilement des cellules.

Un deuxième type connu d'alimentation et de récupération des gaz consiste en une alimentation et récupération du gaz par répartition de celui-ci entre toutes les cellules au sein même du réacteur. Ce deuxième type est généralement connu sous l'appellation en anglais « *internal manifold ».*

On distingue dans ce deuxième type connu, deux configurations distinctes en fonction des composants de l'empilement concernés ou non par le passage effectif des gaz.

La première configuration se caractérise par le fait que les colonnes d'alimentation et de récupération des gaz traversent à la fois chaque cellule d'électrolyse et chaque interconnecteur. Cette première configuration est schématisée en figure 4A : on voit une colonne 6 d'alimentation en gaz (clarinette) qui traverse l'ensemble des composants de l'empilement, à savoir les cellules C1, C2, C3 et les interconnecteurs 5. Des joints d'étanchéité 7 sont agencés individuellement autour de la colonne 6 au niveau de chaque électrode (anodes 4.1, 4.2, 4.3 sur la figure 4A) non concernée par l'alimentation du gaz (H2 sur la figure 4A), c'est-à-dire dans le compartiment opposé à celui du gaz alimenté. Dans cette première configuration, les cellules peuvent avoir les mêmes dimensions que les interconnecteurs, ce qui a comme avantage de simplifier l'isolation électrique entre interconnecteurs. Autrement dit, dans cette première configuration, la fonction A/ précitée est réalisée de manière satisfaisante. De même, les gaz combustible ou drainant alimentant directement chaque cellule en son sein, la fonction C/ précitée est relativement facile à réaliser, même s'il est nécessaire de veiller à avoir suffisamment de pertes de charge au sein de chaque compartiment anodique ou cathodique de manière à garantir l'homogénéité de distribution de chaque cellule à partir de la même colonne d'alimentation. Les inconvénients majeurs de cette première configuration sont d'une part d'avoir à percer chaque cellule, ce qui la rend plus fragile, et d'autre part d'avoir à réaliser des joints d'étanchéité sur cellule autour de chaque colonne 6 d'alimentation et de récupération de gaz dans le compartiment anodique ou cathodique opposé, notamment autour de la colonne de récupération d'H2 au niveau du compartiment anodique de récupération d'O2 et réciproquement, ce qui complique la réalisation de la fonction B/ précitée.

La deuxième configuration se caractérise par le fait que les colonnes d'alimentation et de récupération des gaz ne traversent que les interconnecteurs. Cette deuxième configuration est schématisée en figure 4B : on voit une colonne 6 d'alimentation en gaz qui traverse uniquement les interconnecteurs 5, les cellules C1, C2, C3 n'étant pas percées. Ici encore, des joints d'étanchéité 7 sont agencés individuellement autour de la colonne 6 au niveau de chaque électrode (anodes 4.1, 4.2, 4.3 sur la figure 4B) non concernée par l'alimentation du gaz (H2 sur la figure 4B), c'est-à-dire dans le compartiment opposé à celui du gaz alimenté. Cette deuxième configuration a donc pour avantage notable de préserver l'intégrité des cellules. Elle nécessite cependant d'avoir une bonne isolation électrique entre deux interconnecteurs adjacents, en périphérie des cellules empilées, et de réaliser une bonne gestion du passage des gaz entre leurs colonnes de distribution et les cellules.

Différentes variantes sont actuellement connues pour réaliser cette deuxième configuration « *internal manifold*» sans percement des cellules de l'empilement.

Une première variante, qui est celle la plus répandue, consiste d'abord à réaliser chaque interconnecteur en alliage métallique selon une géométrie en relief avec des nervures ou dents séparées par des canaux, comme déjà montré en figure 2, éventuellement sous la forme d'une structure particulière: l'amenée ou la collecte du courant à l'électrode est réalisée par les dents ou nervures qui sont en contact mécanique direct avec l'électrode concernée et la distribution des gaz et récupération des gaz produits est faite par les canaux. Pour assurer la bonne isolation électrique entre interconnecteurs adjacents, des joints en verre sont déposés entre eux. Cette première variante est schématisée en figure 5 : les joints en verre sont réalisés pour être déposés entre deux interconnecteurs 5 adjacents autour de chaque colonne 6 de distribution des gaz. Cette première variante présente plusieurs inconvénients que l'on peut énumérer comme suit:
- un risque de court-circuit non négligeable en cas de quantité de verre insuffisante initialement, de fluage du verre conduisant à un contact direct entre interconnecteurs adjacents ou en cas de vieillissement du verre au contact des interconnecteurs métalliques tel que le joint perde progressivement ses propriétés d'isolation électrique ;
- un risque de mauvaise distribution des gaz du fait de la proximité entre les trous de distribution dans l'interconnecteur définissant les colonnes de distribution de gaz et le verre autour : en effet, en cas de mauvaise maîtrise de la quantité de verre nécessaire, celui-ci peut venir obstruer les trous de distribution ;
- la difficulté à réaliser toutes les étanchéités de manière satisfaisante en présence d'autant de reliefs (nervures, canaux) sur les interconnecteurs ;
- un coût élevé des interconnecteurs: en effet, comme ceux montrés en figure 2, les interconnecteurs 5 sont usuellement réalisés par usinage mécanique de plaques épaisses ou par emploi de tôles minces, typiquement de 0,1 à 2 mm, embouties puis assemblées entre elles par soudage laser. Les coûts de matière et d'usinage sont importants. De plus, le coût de l'outillage d'emboutissage nécessite une production en grande série pour être économiquement rentable.

Une deuxième variante consiste à revêtir d'un revêtement isolant particulier soit les reliefs des interconnecteurs dans les zones autour des colonnes de distribution comme décrit dans la demande de brevet US 2011/0269059, soit des pièces intermédiaires comme décrit dans la demande de brevet US 2005/0186463. Cette deuxième variante est schématisée en figure 6 : un revêtement isolant électrique 71 est directement en contact avec chaque interconnecteur 5 autour de la colonne de distribution 6 et un joint d'étanchéité 70 en verre est intercalé entre deux revêtement 71 adjacents. Cette deuxième variante a pour avantage de permettre une bonne isolation électrique et d'assurer la protection de l'alliage métallique des interconnecteurs vis-à-vis du verre nécessaire pour la constitution des joints d'étanchéité 70. En revanche, elle présente toujours certains des inconvénients déjà cités pour la première variante, à savoir le coût élevé des reliefs des interconnecteurs et le risque de mauvaise distribution des gaz du fait du risque de bouchage des trous de distribution du gaz par le verre. En outre, le revêtement 71 doit être réalisé avec une densité importante pour pouvoir être étanche.

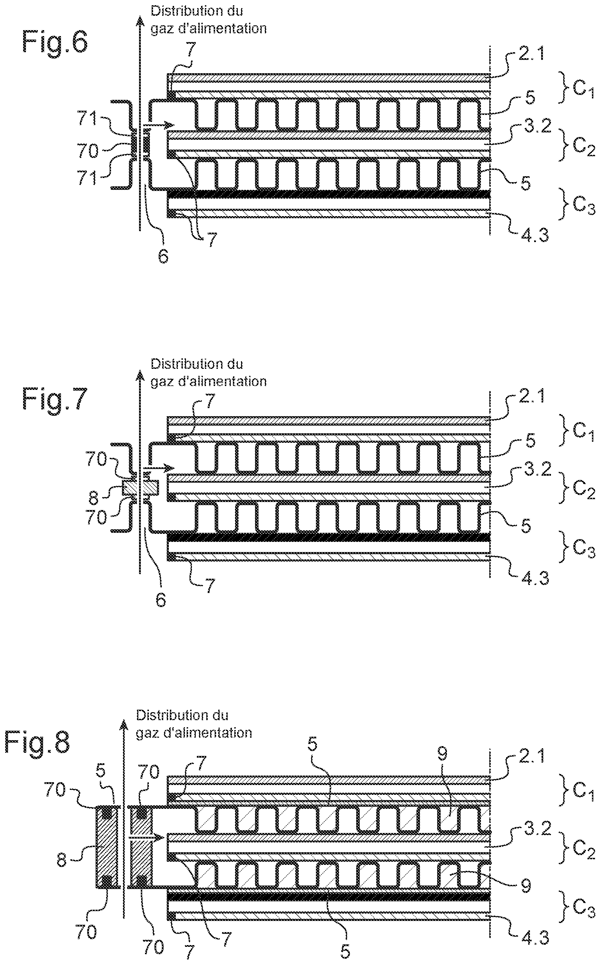

Une troisième variante enfin consiste à agencer une pièce supplémentaire dense et en matériau isolant électrique autour de la colonne de distribution des gaz. Cette pièce porte un joint en verre sur chacune de ses faces d'appui. Cette troisième variante est schématisée en figure 7 : la pièce en matériau isolant électrique 8 porte sur chacune de ses faces d'appui un joint en verre 70. Cette troisième variante a pour avantage de garantir la bonne isolation électrique entre interconnecteurs adjacents. En revanche, elle présente toujours certains des inconvénients déjà cités pour les première et deuxième variantes, à savoir le coût élevé des reliefs des interconnecteurs et le risque de mauvaise distribution des gaz du fait du risque de bouchage des trous de distribution du gaz par le verre. De plus, l'introduction d'un grand nombre de pièces supplémentaires au sein de l'empilement rend plus complexes la conception et le montage des différents composants, notamment le contrôle des chaînes de côtes perpendiculaires au plan des cellules pour garantir un bon contact électrique entre interconnecteur et cellules.

Il existe donc un besoin de trouver une autre variante d'une configuration, dite *« internal manifold*», d'alimentation et de récupération des gaz au sein d'un électrolyseur (EHT) de type SOEC ou d'une pile à combustible de type SOFC permettant de réaliser les fonctions A/ à C/ précitées, notamment en s'affranchissant de, à tout le moins, en limitant les inconvénients des trois variantes existantes précitées tout en conservant leurs avantages.

Un but de l'invention est de répondre au moins en partie à ce besoin.

Un autre but de l'invention est de proposer une variante d'une configuration, dite «*internal manifold*», d'alimentation et de récupération des gaz au sein d'un électrolyseur (EHT) de type SOEC ou d'une pile à combustible de type SOFC permettant de réduire le nombre de pièces utilisées et donc d'en réduire les coûts tout en simplifiant et sécurisant les opérations de montage des différents composants.

### Exposé de l'invention

Pour ce faire, l'invention concerne, sous l'un de ses aspects, un dispositif formant un cadre d'isolation électrique et d'étanchéité pour la distribution des gaz dans un électrolyseur à haute température de la vapeur d'eau type SOEC ou dans une pile à combustible de type SOFC, le dispositif comportant :
- une pièce en matériau isolant électrique allongée selon deux axes de symétrie (X, Y) orthogonaux entre eux et percée d'une lumière centrale dont le bord périphérique constitue un support d'une cellule électrochimique SOEC ou SOFC formée d'une cathode, d'une anode, et d'un électrolyte intercalé entre la cathode et l'anode, la pièce étant également percée de quatre lumières périphériques opposées deux à deux à la périphérie de sa lumière centrale, deux des lumières périphériques étant allongées sur une longueur correspondant sensiblement à la longueur de la lumière centrale selon l'un X des axes et étant réparties de part et d'autre dudit axe X, tandis que les deux autres lumières périphériques sont allongées sur une longueur correspondant sensiblement à la longueur de la lumière centrale selon l'autre Y des axes et étant réparties de part et d'autre dudit axe Y, la pièce comportant en outre, sur l'une de ses faces principales, des nervures définissant des canaux de distribution des gaz reliant chacune des deux lumières périphériques allongées selon l'axe X à la lumière centrale, et sur sa face principale opposée des nervures définissant des canaux de distribution des gaz reliant chacune des deux lumières périphériques allongées selon l'axe Y à la lumière centrale, la pièce comportant en outre sur chacune de ses faces principales au moins trois zones continues en creux dont une à la périphérie à la fois de la lumière centrale, des nervures et des deux lumières reliées à la lumière centrale et dont chacune des deux autres à la périphérie d'une des lumières périphériques non reliées à la lumière centrale ;
- des joints d'étanchéité sous forme de cordons continus dont un déposé sur le support de la cellule et les autres déposés individuellement dans ou le long de chacune des zones continues en creux.

Par « lumière » on entend ici et dans le cadre de l'invention, un trou débouchant de part et d'autre de la pièce en matériau isolant électrique.

Autrement dit, l'invention consiste essentiellement de regrouper une partie des fonctions d'étanchéité, de distribution des gaz et d'isolation électrique entre interconnecteurs au sein d'un même composant sous la forme d'un cadre en matériau isolant électrique dont les zones en creux servent de support aux joints proprement dits, ce qui facilite leur mise en oeuvre et leur maintien. Ces zones en creux servent aussi à comprimer le matériau isolant électrique constitutif du cadre, tel que le mica par le matériau constitutif d'un joint, tel que le verre. Le cadre d'isolation électrique et d'étanchéité selon l'invention est ainsi plus dense. Enfin, ces zones en creux peuvent servir avantageusement de zones de récupération du « trop plein » de matériau constitutif d'un joint, tel que le verre, lorsque par choix de construction, ce dernier est placé entre deux zones en creux.

Le cadre d'isolation électrique et d'étanchéité ainsi défini selon l'invention permet de garantir le fonctionnement satisfaisant d'un électrolyseur EHT de type SOEC ou d'une pile à combustible de type SOFC en assurant les fonctions A/ à C/ précités.

Grâce au cadre d'isolation et d'étanchéité selon l'invention, on s'affranchit des inconvénients des variantes de réalisation de la configuration dite « internal manifold » selon l'état de l'art : en effet, on supprime toute réalisation coûteuse des reliefs des interconnecteurs qui étaient auparavant nécessaires à la distribution des gaz, du fait de leur intégration dans le cadre selon l'invention et on s'affranchit du risque de bouchage par le verre des joints d'étanchéité, du fait des zones en creux qui servent de maintien des joints ou de réceptacles aux surplus de joints susceptibles de fluer.

Le cadre d'isolation électrique et d'étanchéité selon l'invention est facilement manipulable à la main, ce qui facilite le montage de l'empilement d'un réacteur d'électrolyse EHT ou d'une pile à combustible. En outre, du fait de sa fonction support des joints d'étanchéité, avantageusement en verre ou en vitrocéramique, le cadre permet une manipulation aisée des joints préalablement déposés sous forme de cordons.

L'invention permet d'envisager l'utilisation d'un interconnecteur consistant en une simple tôle métallique plane sur laquelle sont rapportés de part et d'autre un élément de contact électrique et de répartition des gaz sur chaque cellule, et donc d'en réduire sensiblement le coût.

Selon un mode de réalisation avantageux, la pièce en matériau isolant électrique est à base de mica. En sus d'être un très bon matériau isolant électrique, le mica peut s'emboutir avec une grande profondeur. Ainsi, lors d'un emboutissage, on peut comprimer jusqu'à 50% de l'épaisseur initiale du mica. L'opération d'emboutissage densifie localement le mica, ce qui le rend plus dense et donc est favorable pour son étanchéité intrinsèque.

De préférence, la pièce en matériau isolant électrique est obtenue à partir d'une bande en céramique crue et frittée.

Les reliefs de la pièce en matériau isolant électrique constitués par le support, les nervures, canaux, zones en creux sont de préférence des emboutis.

Les joints sous forme de cordon continu sont de préférence à base de verre ou de vitrocéramique.

L'épaisseur de la pièce en matériau isolant électrique est avantageusement comprise entre 0,1 et 2 mm.

Selon une première variante, au moins un cordon continu formant un joint d'étanchéité est déposé dans une zone continue en creux.

Alternativement, selon une deuxième variante, au moins un cordon continu formant un joint d'étanchéité est déposé sur l'une des faces principales entre deux zones continues en creux.

La profondeur des zones continues en creux de la pièce en matériau isolant électrique dans le sens orthogonal au plan défini par les axes (X, Y) est de préférence comprise entre 0,05 et 1 mm.

L'invention a également pour objet sous un autre de ses aspects, un réacteur d'électrolyse (EHT) de type SOEC ou pile à combustible de type SOFC comportant un empilement de cellules électrochimiques élémentaires à oxydes solides formées chacune d'une cathode, d'une anode et d'un électrolyte intercalé entre la cathode et l'anode, une pluralité de cadres d'isolation électrique et d'étanchéité tel que décrit précédemment, dont le support supporte une des cellules électrochimiques élémentaires, une pluralité d'éléments de contacts électriques agencés chacun en contact direct avec une anode ou une cathode d'une cellule électrochimique élémentaire et une pluralité d'interconnecteurs électrique et fluidique constitué chacun d'une seule tôle métallique plane et percée de quatre lumières, les interconnecteurs étant agencés chacun en contact avec deux cadres d'isolation électrique adjacents et avec leur quatre lumières en regard des lumières correspondantes desdits cadres adjacents, et en étant en contact avec deux éléments de contact électrique adjacents dont l'un est en contact électrique avec la cathode de l'une des deux cellules élémentaires et l'autre est en contact électrique avec l'anode ou la cathode de l'autre des deux cellules élémentaires.

Chaque tôle plane métallique constituant un interconnecteur peut être en acier ferritique à environ 20% de chrome, de préférence en CROFER® 22APU ou le FT18TNb, à base Nickel de type Inconel® 600 ou Haynes®.

De préférence, chaque tôle plane a une épaisseur comprise entre 0,1 et 1mm.

Selon une variante de réalisation, les cellules élémentaires d'électrolyse sont de type à cathode support.

Les éléments de contact électrique peuvent être constitués par des fils métalliques ou une grille métallique ou une partie de tôle emboutie.

Par «cellule à cathode support », on entend ici et dans le cadre de l'invention la définition déjà donnée dans le domaine de l'électrolyse de l'eau à haute température EHT et désignée sous l'acronyme anglais CSC pour « *Cathode-supported Cell* », c'est-à-dire une cellule dans laquelle l'électrolyte et l'électrode à oxygène (anode) sont disposées sur l'électrode à hydrogène (cathode) plus épaisse qui sert donc de support.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :
- la figure 1 est une vue schématique montrant le principe de fonctionnement d'un électrolyseur d'eau à haute température;
- la figure 2 est une vue schématique en éclaté d'une partie d'un électrolyseur de vapeur d'eau à haute température (EHT) de type SOEC comprenant des interconnecteurs selon l'état de l'art,
- la figure 3 est une vue schématique en éclaté partiel d'un électrolyseur EHT ou d'une pile à combustible de type SOFC selon l'état de l'art à type d'alimentation et de récupération des gaz dite « *external manifold* »,
- la figure 4A est une vue schématique en coupe partielle d'un électrolyseur EHT ou d'une pile à combustible de type SOFC selon l'état de l'art à type d'alimentation et de récupération des gaz dite « *internal manifold*» et selon une configuration avec percement des cellules électrochimiques,
- la figure 4B est une vue schématique en coupe partielle d'un électrolyseur EHT ou d'une pile à combustible de type SOFC selon l'état de l'art à type d'alimentation et de récupération des gaz dite «*internal manifold*» et selon une configuration sans percement des cellules électrochimiques,
- les figures 5 à 7 sont des vues en coupe partielle d'un électrolyseur EHT ou d'une pile à combustible de type SOFC selon la configuration de la figure 4B et respectivement selon une première, deuxième et troisième variante,
- la figure 8 est une vue schématique en coupe partielle d'un électrolyseur EHT ou d'une pile à combustible de type SOFC selon l'invention à type d'alimentation et de récupération des gaz dite « *internal manifold*» et selon une configuration sans percement des cellules électrochimiques grâce au cadre d'isolation électrique et d'étanchéité selon l'invention,
- les figures 9A et 9B sont des vues en éclaté d'une partie d'un réacteur d'électrolyse selon l'invention avec un cadre d'isolation électrique et d'étanchéité, des interconnecteurs et des éléments de contact électrique selon l'invention, respectivement vue du côté de l'alimentation en air et récupération en oxygène 02 et, du côté de l'alimentation en vapeur d'eau H2O et récupération en hydrogène H2,
- la figure 10 est une vue en perspective d'une partie d'un cadre d'isolation électrique et d'étanchéité selon l'invention sans les joints d'étanchéité,
- la figure 11 est une vue en coupe partielle montrant un détail d'une partie d'un réacteur d'électrolyse selon l'invention du côté de l'alimentation en vapeur d'eau H2O,
- la figure 12 est une vue en coupe partielle montrant un détail d'une partie d'un réacteur d'électrolyse selon l'invention du côté de l'alimentation en air pour la récupération de l'oxygène 02 produit,
- les figures 13A et 13B sont des vues en coupe partielle montrant la réalisation de cordons de joints dans le cadre d'isolation électrique et d'étanchéité respectivement selon une première et deuxième variantes de l'invention,
- la figure 14 est une vue en coupe partielle montrant l'agencement d'un élément de mesure du potentiel électrique et/ou de la température dans une partie d'un électrolyseur EHT avec un cadre d'isolation électrique et d'étanchéité selon l'invention.

On précise ici que sur l'ensemble des figures 1 à 12, les symboles et les flèches d'alimentation d'une part de vapeur d'eau H2O, de distribution et de récupération de dihydrogène H2 et d'oxygène O2, et du courant, de distribution et de récupération d'oxygène 02, et du courant sont montrés à des fins de clarté et de précision, pour illustrer le fonctionnement d'un réacteur d'électrolyse de vapeur d'eau selon l'état de l'art et d'un réacteur d'électrolyse selon l'invention.

On précise également que tous les électrolyseurs décrits sont de type à oxydes solides (SOEC, acronyme anglais de *« Solid Oxyde électrolyte Cell »)* fonctionnant à haute température. Ainsi, tous les constituants (anode/électrolyte/cathode) d'une cellule d'électrolyse sont des céramiques. La haute température de fonctionnement d'un électrolyseur (réacteur d'électrolyse) est typiquement comprise entre 600°C et 1000°C.

Typiquement, les caractéristiques d'une cellule d'électrolyse élémentaire SOEC convenant à l'invention, du type cathode support (CSC), peuvent être celles indiquées comme suit dans le tableau 1 ci-dessous.

**TABLEAU 1**

| **Cellule d'électrolyse** | **Unité** | **Valeur** |
|---|---|---|
| **Cathode 2** | | |
| Matériau constitutif | | Ni-YSZ |
| Epaisseur | µm | 315 |
| Conductivité thermique | W m⁻¹ K⁻¹ | 13,1 |
| Conductivité électrique | Ω⁻¹ m⁻¹ | 10⁵ |
| Porosité | | 0,37 |
| Perméabilité | m² | 10⁻¹³ |
| Tortuosité | | 4 |
| Densité de courant | A.m⁻² | 5300 |
| **Anode 4** | | |
| Matériau constitutif | | LSM |
| Epaisseur | µm | 20 |
| Conductivité thermique | W m⁻¹ K⁻¹ | 9,6 |
| Conductivité électrique | Ω⁻¹ m⁻¹ | 1 10⁴ |
| Porosité | | 0,37 |
| Perméabilité | m² | 10⁻¹³ |
| Tortuosité | | 4 |
| Densité de courant | A.m⁻² | 2000 |
| **Electrolyte 3** | | |
| Matériau constitutif | | YSZ |
| Epaisseur | µm | |
| Résistivité | Ω m | 0,42 |

L'ensemble des figures 1 à 7 a déjà été commenté en préambule. Elles ne sont donc pas détaillées ci-après.

La figure 8 montre en vue de coupe une partie d'électrolyseur de vapeur d'eau EHT conforme à l'invention. Cet électrolyseur comporte un dispositif formant un cadre d'isolation électrique et d'étanchéité comportant une pièce en matériau isolant électrique 8 qui réalise l'isolation électrique entre deux interconnecteurs adjacents 5 dans l'empilement, dont la géométrie permet la distribution des gaz en formant une partie de la colonne de distribution 6 (clarinette) et vers les électrodes des cellules C1, C2... concernées et qui porte les joints d'étanchéité 7, 70 nécessaires à l'étanchéité à la fois autour de la colonne 6 et autour de l'électrode opposée à la distribution du gaz d'alimentation.

Le cadre d'isolation et d'étanchéité selon l'invention permet l'utilisation dans l'électrolyseur EHT d'interconnecteurs 5 uniquement sous la forme de tôles métalliques planes, le contact électrique entre une tôle plane 5 constituant un interconnecteur et une cathode 2 ou une anode 4 d'une cellule C1, C2... étant par ailleurs réalisé par un élément de contact électrique 9 rapporté.

Ainsi, comme schématisé en figure 8, selon l'invention le cadre d'isolation électrique et d'étanchéité selon l'invention a une structure avec tous les reliefs nécessaires à la fois au support d'une cellule C1,C2...., à la distribution des gaz dans la colonne de distribution 6 et vers les électrodes de chaque cellule, et au support des joints d'étanchéité 7,70.

Le cadre 8 selon l'invention constitue un sous-ensemble mécanique d'un électrolyseur EHT qui est aisément manipulable pour sa mise en place dans l'empilement.

Grâce à l'invention, on réduit le coût élevé de réalisation d'un interconnecteur 5 selon l'état de l'art comme montré en figure 2 puisque il n'y a pas à usiner ou emboutir une plaque métallique pour la structurer avec des canaux de distribution des gaz. En outre, on supprime les risques de bouchage des trous de distribution par les joints en verre et donc de mauvaise distribution des gaz vers une cellule, risques inhérents à l'ensemble des variantes connues de configuration d'alimentation en gaz dite « *internal manifold*».

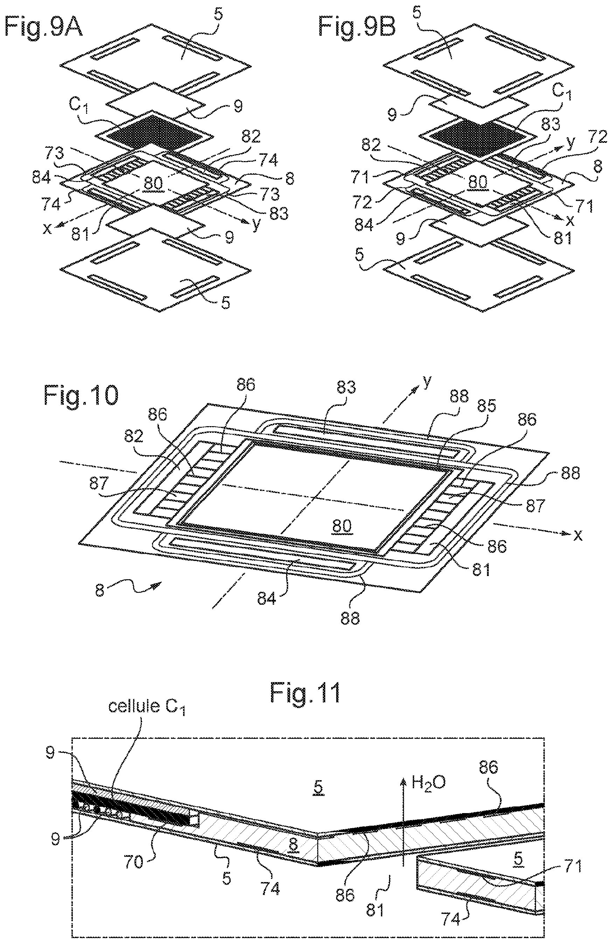

La figure 10 montre en perspective la pièce 8 en matériau isolant électrique d'un cadre d'isolation électrique et d'étanchéité selon l'invention pour la distribution des gaz dans un électrolyseur à haute température de la vapeur d'eau type SOEC ou dans une pile à combustible de type SOFC.

Cette pièce 8 en matériau isolant électrique est allongée selon deux axes de symétrie X, Y orthogonaux entre eux. Elle est percée d'une lumière centrale 80 et également de quatre lumières périphériques 81, 82, 83, 84 opposées deux à deux à la périphérie de sa lumière centrale.

Le bord périphérique 85 de la lumière centrale 80 constitue une portée, c'est-à-dire une surface d'appui périphérique, d'une cellule électrochimique C1, C2, ... de type SOEC.

Deux 83, 84 des lumières périphériques sont allongées sur une longueur correspondant sensiblement à la longueur de la lumière centrale 80 selon l'axe X et sont réparties de part et d'autre dudit axe X.

Les deux autres 81, 82 lumières périphériques sont allongées sur une longueur correspondant sensiblement à la longueur de la lumière centrale selon l'axe Y et sont réparties de part et d'autre dudit axe Y.

Sur l'une des faces principales de la pièce 8, des nervures 86 définissant des canaux 87 de distribution de gaz relient chacune des deux lumières 83, 84 périphériques allongées selon l'axe X à la lumière centrale 80.

Sur la face principale opposée de la pièce 8, sont également ménagées des nervures 86 définissant des canaux 87 de distribution des gaz reliant chacune des deux lumières 81, 82 périphériques allongées selon l'axe Y à la lumière centrale.

La pièce 8 comportant en outre sur chacune de ses faces principales au moins trois zones 88 continues en creux.

Tel qu'illustré en figure 10, une de ces zones 88 est réalisée à la périphérie à la fois de la lumière centrale 80, des nervures 86 et des deux lumières 81, 82 reliées à la lumière centrale 80. Chacune des deux autres zones 88 est à la périphérie d'une des lumières 83 ou 84 périphériques non reliées à la lumière centrale 80. Comme montré en figure 11, ces zones en creux 88 se rejoignent, c'est-à-dire ont une partie en commun.

Comme montré sur les figures 9A et 9B, le cadre d'isolation électrique intègre la fonction d'étanchéité grâce à des joints d'étanchéité sous forme de cordons continus. Un des joints 7 est déposé sur le support 85 de la cellule C1 et les autres joints 71, 72, 73, 74 sont déposés individuellement dans chacune des zones 88 continues en creux. En variante, les autres joints 71, 72, 73, 74 peuvent être déposés individuellement entre deux des zones 88 continues en creux : les zones 88 en creux servent alors de zones de récupération de « trop plein » du matériau constitutif des joints. Les joints 7, 71, 72, 73, 74 sous forme de cordon continu sont de préférence à base de verre ou de vitrocéramique mis en oeuvre sous forme de barbotine.

La pièce 8 en matériau isolant électrique selon l'invention présente donc un ensemble de formes de relief, à savoir les nervures 86 définissant les canaux 87 de distribution de gaz, le support 85 d'une cellule d'électrolyse C1, les zones en creux 88 adaptées pour porter des joints d'étanchéité, qui permettent d'exercer l'ensemble des fonctions du cadre, à savoir, outre l'isolation électrique intrinsèque au matériau isolant électrique de la pièce 8, respectivement la distribution des gaz, le support de cellule, l'étanchéité autour des colonnes 6 de distribution de gaz et des cellules.

Selon la nature du matériau isolant électrique choisi, les techniques à employer pour réaliser ces formes de relief peuvent varier et la gamme de coût de fabrication de la pièce 8 selon l'invention peut également varier.

Les inventeurs pensent que l'usinage d'une céramique pour réaliser cette pièce 8 implique un coût de réalisation rédhibitoire dans le contexte d'un électrolyseur EHT ou d'une pile à combustible SOFC, avec une faisabilité non acquise à ce jour sur certaines parties très minces, typiquement de l'ordre d'une centaine de microns restants sur une pièce de 1 mm d'épaisseur.

Les inventeurs pensent qu'il est ainsi préférable de réaliser par emboutissage l'ensemble des formes de relief. L'emboutissage est ainsi réalisé de préférence soit au sein d'une bande de céramique crue à fritter une fois formée, soit au sein d'un isolant déformable du type à base de mica. Cette technique d'emboutissage permet avantageusement de densifier le mica dans les zones comprimées pour la création des zones en creux, le verre ou la vitrocéramique pour réaliser les joints d'étanchéité étant alors déposé sur la pièce 8 sans risque de l'infiltrer. En outre, cette technique d'emboutissage, sans enlèvement de copeaux, permet d'éviter toute perte de matière et est particulièrement avantageuse pour une production en série avec un grand nombre de pièces. De plus, du fait que selon l'invention, les tolérances de fabrication par emboutissage de la pièce 8 en matériau isolant selon l'invention sont bien moindres que celle requises lors de l'emboutissage d'interconnecteurs selon l'état de l'art pour former leurs reliefs, notamment celui destiné au contact électrique et à celui de l'étanchéité. Typiquement, il est envisagé des tolérances de fabrication de 0,05 à 0,1 mm pour des pièces 8 en matériau isolant selon l'invention au lieu des tolérances de 0,01mm requises pour la fabrication par emboutissage des interconnecteurs selon l'état de l'art.

Ainsi, on peut envisager à terme un procédé de réalisation d'un cadre selon l'invention avec toutes ses fonctions qui soit peu coûteux: en effet, l'isolation électrique est intrinsèque à la nature du matériau isolant de la pièce 8, avantageusement à base de mica, les étanchéités sont réalisées en déposant, de manière simple, dans les zones 88 en creux des cordons continus de verre ou de vitrocéramique peu coûteux et déjà éprouvés ou à côté de ces zones en creux, et enfin la distribution des gaz est assurée en formant les canaux par emboutissage de la pièce 8 avec des tolérances moindres donc moins coûteuses.

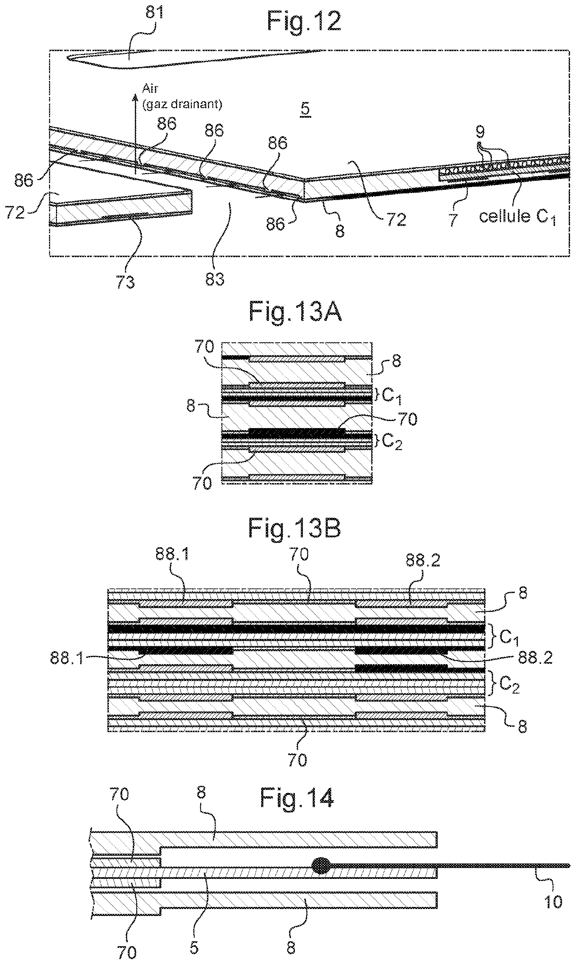

Les figures 11 et 12 montrent en vue de coupe l'alimentation par la colonne de distribution (clarinette) et la distribution des gaz du côté respectivement d'un compartiment cathodique (H2O/H2) d'une cellule C1 d'électrolyse et d'un compartiment anodique (Air/02) au travers d'un cadre d'isolation électrique et d'étanchéité selon l'invention.

On distingue en particulier sur ces figures 11 et 12, l'agencement relatif entre interconnecteurs 5 sous la forme de tôles métalliques planes, cadre d'isolation électrique et d'étanchéité avec la pièce 8, une cellule d'électrolyse C1 et les éléments de contact électrique 9.

On distingue également clairement les joints d'étanchéité envisagés pour chacun des deux compartiments anodique et cathodique. Le joint 7 sous la cellule C1 sépare le compartiment cathodique, i.e. celui de production de l'H2, du compartiment anodique, i.e. celui de récupération de l'O2 produit. Le joint périphérique 71 autour de la clarinette 81 d'alimentation en vapeur d'eau H2O ferme le compartiment cathodique. Le joint 74 périphérique autour de la clarinette 81 empêche le passage de H2O/H2 dans un compartiment anodique. Le joint périphérique 73 ferme le compartiment anodique. Le joint 72 périphérique autour de la clarinette 83 d'alimentation en air en tant que gaz drainant empêche son passage dans un compartiment cathodique.

On décrit maintenant en référence à ces figures 11 et 12, le procédé de fonctionnement d'un réacteur d'électrolyse avec un cadre d'isolation électrique selon l'invention tel qu'il vient d'être décrit.

On précise tout d'abord que l'ensemble des cellules d'électrolyse C1 à C3 de l'empilement de l'électrolyseur EHT sont traversées par le même courant électrique qui les alimente en série. Le courant passe à travers une tôle métallique plane 5 constituant un interconnecteur puis à travers un élément de contact électrique 9 et à travers chaque cellule C1 à C3 et ressort à travers l'élément de contact électrique 9 opposé et à la tôle métallique plane opposée 5.

Le procédé de fonctionnement du réacteur d'électrolyse EHT est réalisé comme suit :
- on alimente les lumières 81 des cadres 8 en vapeur d'eau H2O qui parvient jusqu'aux cathodes 2.1, 2.2, 2.3 des cellules C1 à C3 en passant dans les canaux d'alimentation 87 en communication fluidique avec chaque lumière 81 (figure 11),
- on alimente simultanément en courant croisé les lumières 83 en air en tant que gaz drainant qui parvient jusqu'aux anodes 4.1, 4.2, 4.3 des cellules C1 à C3 en passant dans les canaux d'alimentation 86 en communication fluidique avec chaque lumière 83 sur la face opposée à celle ménageant les canaux 86 d'alimentation en vapeur d'eau (figure 12),
- on récupère l'hydrogène produit par l'électrolyse de la vapeur d'eau, dans les lumières 82 qui provient des canaux 87 de récupération en communication fluidique avec ces dernières, et simultanément l'oxygène avec son gaz drainant produit par l'électrolyse de la vapeur d'eau dans les lumières 84 qui provient des canaux 87 de récupération en communication fluidique avec ces dernières.

Les figures 13A et 13B montrent chacune une variante de réalisation possible des joints d'étanchéités sous forme de cordons continus à base de verre ou de vitrocéramique mises en oeuvre sous forme de barbotine. Selon l'invention, il est possible de préparer tous les joints d'étanchéité avant l'opération d'assemblage par empilement proprement dit de tous les composants de l'électrolyseur EHT. Les cordons continus 7, 70, 71, 72, 73, 74 peuvent être ainsi déposés dans ou le long des zones continues 88 en creux avant la réalisation de l'empilement. Cela a pour avantage que l'on peut manipuler aisément un seul élément physique, à savoir le cadre constitué de la pièce 8 avec ses joints déposés 7, 70, 71, 72, 73, 74. Ainsi, on s'affranchit des manipulations délicates à réaliser selon l'état de l'art, de joints d'étanchéité sous forme de cordons non supportés c'est-à-dire sans consistance.

Selon la variante illustrée en figure 13A, un cordon continu 70 en verre ou vitrocéramique est logé dans une zone 88 en creux de la pièce isolante 8 qui constitue alors une cale latérale pour le maintien du verre dans son logement.

Selon la variante illustrée en figure 13B, un cordon continu 70 en verre ou vitrocéramique est logé entre deux zones continues 88.1, 88.2 en creux de la pièce isolante 8, l'une et/ou l'autre de ces zones continues 88.1, 88.2 en creux constituant alors un logement de trop plein de verre ou de vitrocéramique si la quantité initiale utilisée pour réaliser le cordon 70 était trop importante. De plus, ces zones en creux sont avantageusement réalisées par une opération d'emboutissage qui densifie localement le matériau constitutif du cadre tel que le mica, ce qui le rend plus dense et donc est favorable pour son étanchéité intrinsèque. Lors d'un emboutissage, on peut comprimer jusqu'à 50% de l'épaisseur initiale du mica. Cette variante est particulièrement avantageuse, car la quantité de verre ou vitrocéramique juste nécessaire à la réalisation de sa fonction d'étanchéité est parfois difficile à estimer dans le contexte d'un électrolyseur EHT ou d'une pile à combustible SOFC et pourtant indispensable à leur bon fonctionnement. De plus, le matériau constitutif du cadre tel que le mica a tendance à absorber celui constitutif du joint tel que le verre. Il est donc important de maitriser la largeur de la zone supportant le verre de manière à maitriser la quantité de verre à déposer à la fois pour saturer le mica et pour combler l'espace nécessaire à l'étanchéité. Cette variante permet une telle maîtrise puisque la largeur est fixée par la distance entre deux zones en creux adjacentes.

La figure 14 illustre la possibilité de mettre un élément d'instrumentation 10 de prise de tension électrique et/ou de température dans des zones amincies et dans les angles de la pièce 8 en matériau isolant, sans risque de court-circuit ou de surépaisseur, du fait de la réalisation par emboutissage de cette pièce 8.

Comme déjà indiqué, du fait de la structure du cadre d'isolation électrique selon l'invention, un interconnecteur 5 selon l'invention peut avantageusement consister en une seule tôle mince métallique plane, percée avec des lumières correspondantes au quatre lumières de la pièce 8 du cadre. De préférence, une tôle mince est une tôle d'épaisseur inférieure à 1 mm, typiquement de l'ordre de 0,2 mm. Toutes les tôles sont avantageusement en acier ferritique à environ 20% de chrome, de préférence en CROFER® 22APU ou le FT18TNb, à base Nickel de type Inconel® 600 ou Haynes® dans des épaisseurs typiquement comprises entre 0,1 et 1 mm.

L'invention n'est pas limitée aux exemples qui viennent d'être décrits ; on peut notamment combiner entre elles des caractéristiques des exemples illustrés au sein de variantes non illustrées.

Ainsi, si dans les exemples illustrés, les joints d'étanchéité 71 et 73 autour respectivement des compartiments cathodiques et anodiques présentent une partie de cordon continu de verre ou de vitrocéramique qui est commune avec les joints d'étanchéité 72 et 74 respectivement des lumières 83, 84 et 81, 82 de distribution de gaz, on peut tout aussi prévoir des cordons continus distincts, c'est-à-dire par exemple sur une même face principale du cadre 8 un cordon continu 71 autour d'un compartiment cathodique et un cordon continu 72 distinct du cordon 71, autour d'une lumière 83.

## Revendications

1. Dispositif formant un cadre d'isolation électrique et d'étanchéité pour la distribution des gaz dans un électrolyseur à haute température de la vapeur d'eau type SOEC ou dans une pile à combustible de type SOFC, le dispositif comportant :
- une pièce (8) en matériau isolant électrique allongée selon deux axes de symétrie (X, Y) orthogonaux entre eux et percée d'une lumière centrale (80) dont le bord périphérique constitue un support (85) d'une cellule électrochimique (C1, C2, ...) SOEC ou SOFC formée d'une cathode (2), d'une anode (4), et d'un électrolyte (3) intercalé entre la cathode et l'anode, la pièce étant également percée de quatre lumières périphériques (81, 82, 83, 84) opposées deux à deux à la périphérie de sa lumière centrale, deux (83, 84) des lumières périphériques étant allongées sur une longueur correspondant sensiblement à la longueur de la lumière centrale (80) selon l'un X des axes et étant réparties de part et d'autre dudit axe X, tandis que les deux autres (81, 82) lumières périphériques sont allongées sur une longueur correspondant sensiblement à la longueur de la lumière centrale selon l'autre Y des axes et étant réparties de part et d'autre dudit axe Y, la pièce comportant en outre, sur l'une de ses faces principales, des nervures (86) définissant des canaux (87) de distribution de gaz reliant chacune des deux lumières (83, 84) périphériques allongées selon l'axe X à la lumière centrale, et sur sa face principale opposée des nervures (86) définissant des canaux (87) de distribution des gaz reliant chacune des deux lumières (81, 82) périphériques allongées selon l'axe Y à la lumière centrale, la pièce comportant en outre sur chacune de ses faces principales au moins trois zones (88) continues en creux dont une à la périphérie à la fois de la lumière centrale, des nervures et des deux lumières reliées à la lumière centrale et dont chacune des deux autres à la périphérie d'une des lumières périphériques non reliées à la lumière centrale ;
- des joints d'étanchéité sous forme de cordons continus dont un (7) déposé sur le support de la cellule et les autres (71, 72, 73, 74) déposés individuellement dans ou le long de chacune des zones continues en creux.

2. Cadre d'isolation électrique et d'étanchéité selon la revendication 1, dans lequel la pièce en matériau isolant électrique est à base de mica.

3. Cadre d'isolation électrique et d'étanchéité selon la revendication 1, dans lequel la pièce en matériau isolant électrique (8) est obtenue à partir d'une bande en céramique crue et frittée.

4. Cadre d'isolation électrique et d'étanchéité selon la revendication 1 à 3, dans lequel les reliefs de la pièce (8) en matériau isolant électrique constitués par le support (85), les nervures (86), canaux (87), zones en creux (88) sont des emboutis.

5. Cadre d'isolation électrique et d'étanchéité selon l'une des revendications précédentes, dans lequel les joints (7, 71, 72, 73, 74) sous forme de cordon continu sont à base de verre ou de vitrocéramique.

6. Cadre d'isolation électrique et d'étanchéité selon l'une des revendications précédentes, dans lequel l'épaisseur de la pièce (8) en matériau isolant électrique est comprise entre 0,1 et 2 mm.

7. Cadre d'isolation électrique et d'étanchéité selon l'une des revendications précédentes, dans lequel au moins un cordon continu (7, 71, 72, 73, 74) formant un joint d'étanchéité est déposé dans une zone continue (88) en creux.

8. Cadre d'isolation électrique et d'étanchéité selon l'une des revendications 1 à 7, dans lequel au moins un cordon continu (7, 71, 72, 73, 74) formant un joint d'étanchéité est déposé sur l'une des faces principales entre deux zones continues (88.1, 88.2) en creux.

9. Cadre d'isolation électrique et d'étanchéité selon l'une des revendications précédentes, dans lequel la profondeur des zones continues en creux (88, 88.1, 88.2) de la pièce (8) en matériau isolant électrique dans le sens orthogonal au plan défini par les axes (X, Y) est comprise entre 0,05 et 1 mm.

10. Réacteur d'électrolyse (EHT) de type SOEC ou pile à combustible de type SOFC comportant un empilement de cellules électrochimiques (C1, C2, C3) élémentaires à oxydes solides formées chacune d'une cathode (2.1, 2.2..), d'une anode (4.1, 4.2) et d'un électrolyte (3.1, 3.2) intercalé entre la cathode et l'anode, une pluralité de cadres d'isolation électrique et d'étanchéité selon l'une des revendications précédentes dont le support (85) supporte une des cellules électrochimiques élémentaires, une pluralité d'éléments de contacts électriques (9) agencés chacun en contact direct avec une anode ou une cathode d'une cellule électrochimique élémentaire et une pluralité d'interconnecteurs (5) électrique et fluidique constitué chacun d'une seule tôle métallique plane et percée de quatre lumières, les interconnecteurs étant agencés chacun en contact avec deux cadres d'isolation électrique adjacents et avec leur quatre lumières en regard des lumières correspondantes desdits cadres adjacents, et en étant en contact avec deux éléments de contact électrique (9) adjacents dont l'un est en contact électrique avec la cathode (2.1) de l'une des deux cellules (C1) élémentaires et l'autre est en contact électrique avec l'anode (4.2) ou la cathode de l'autre (C2) des deux cellules élémentaires.

11. Réacteur d'électrolyse de type SOEC ou pile à combustible de type SOFC selon la revendication 10, dans lequel chaque tôle plane métallique constituant un interconnecteur (5) est en acier ferritique à environ 20% de chrome, de préférence en CROFER® 22APU ou le FT18TNb, à base Nickel de type Inconel® 600 ou Haynes®.

12. Réacteur d'électrolyse de type SOEC ou pile à combustible de type SOFC selon la revendication 10 ou 11, dans lequel chaque tôle a une épaisseur comprise entre 0,1 et 1 mm.

13. Réacteur d'électrolyse de type SOEC ou pile à combustible de type SOFC selon l'une des revendications 10 à 12, dans lequel les cellules élémentaires d'électrolyse sont de type à cathode support.

14. Réacteur d'électrolyse de type SOEC ou pile à combustible de type SOFC selon l'une des revendications 10 à 13, dans lequel les éléments (9) de contact électrique sont constitués par des fils métalliques ou une grille métallique ou d'une partie de tôle emboutie.

## Patentansprüche

1. Vorrichtung zur Bildung eines Rahmens zur Abdichtung und elektrischen Isolation für die Verteilung von Gasen in einem bei hoher Temperatur arbeitenden Elektrolysegerät vom Typ SOEC für Wasserdampf oder in einer Brennstoffzelle vom Typ SOFC, welche Vorrichtung aufweist:
- ein Teil (8) aus einem elektrisch isolierenden Material, das längs zweier zueinander rechtwinkliger Symmetrieachsen (X, Y) ausgedehnt ist und von einer zentralen Öffnung (80) durchbrochen ist, deren Umfangswand einen Träger (85) für eine elektrochemische SOEC oder SOFC Zelle (C1, C2, ...) bildet, die durch eine Kathode (2), eine Anode (4) und einen zwischen der Kathode und der Anode eingefügten Elektrolyten (3) gebildet wird, wobei das Teil außerdem von vier Randöffnungen (81, 82, 83, 84) durchbrochen ist, die einander paarweise am Rand der zentralen Öffnung gegenüberliegen, wobei zwei (83, 84) der Randöffnungen auf einer Länge ausgedehnt sind, die im wesentlichen der Länge der zentralen Öffnung (80) in Richtung einer der Achsen X entspricht und beiderseits dieser Achse X verteilt sind, während die beiden anderen Randöffnungen (81, 82) auf einer Länge ausgedehnt sind, die im wesentlichen der Länge der zentralen Öffnung in Richtung der anderen Achse Y entspricht, und beiderseits dieser Achse Y verteilt sind, wobei das Teil außerdem auf einer seiner Hauptflächen Rippen (86) aufweist, die Kanäle (87) zur Verteilung von Gas begrenzen, die jede der beiden Randöffnungen (83, 84), die längs der Achse X ausgedehnt sind, mit der zentralen Öffnung verbinden, und auf seiner entgegengesetzten Hauptfläche Rippen (86) aufweist, die Kanäle (87) zur Verteilung von Gas begrenzen, die jede der beiden Randöffnungen (81, 82), die längs der Achse Y ausgedehnt sind, mit der zentralen Öffnung verbinden, wobei das Teil außerdem auf jeder seiner Hauptflächen wenigstens drei durchgehende eingetiefte Zonen (88) aufweist, davon eine am Rand der zentralen Öffnung und zugleich der Rippen und der beiden Öffnungen, die mit der zentralen Öffnung verbunden sind, und jede der beiden anderen Zonen am Rand einer der Randöffnungen, die nicht mit der zentralen Öffnung verbunden sind,
- Dichtungen in der Form von durchgehenden Bändern, von denen eines (7) auf dem Träger der Zelle und die anderen (71, 72, 73, 74) einzeln in oder längs jeder der eingetieften Zonen angeordnet sind.

2. Rahmen zur Abdichtung und elektrischen Isolation nach Anspruch 1, bei dem das Teil aus elektrisch isolierendem Material auf Glimmer basiert.

3. Rahmen zur Abdichtung und elektrischen Isolation nach Anspruch 1, bei dem das Teil (8) aus elektrisch isolierendem Material aus einem Band aus rohem und gesinterten Keramikmaterial erhalten wurde.

4. Rahmen zur Abdichtung und elektrischen Isolation nach einem der Ansprüche 1 bis 3, bei dem die Reliefs des Teils (8) aus elektrisch isolierendem Material, die durch den Träger (85), die Rippen (86), die Kanäle (87) und die eingetieften Zonen (88) gebildet werden, durch Tiefen gebildet sind.

5. Rahmen zur Abdichtung und elektrischen Isolation nach einem der vorstehenden Ansprüche, bei dem die Dichtungen (7, 71, 72, 73, 74) in der Form von durchgehenden Bändern auf Glas oder Glaskeramik basieren.

6. Rahmen zur Abdichtung und elektrischen Isolation nach einem der vorstehenden Ansprüche, bei dem die Dicke des Teils (8) aus elektrisch isolierendem Material zwischen 0,1 und 2 mm beträgt.

7. Rahmen zur Abdichtung und elektrischen Isolation nach einem der vorstehenden Ansprüche, bei dem wenigstens eines der durchgehenden Bänder (7, 71, 72, 73, 74), die eine Dichtung bilden, in einer durchgehenden eingetieften Zone (88) angeordnet ist.

8. Rahmen zur Abdichtung und elektrischen Isolation nach einem der Ansprüche 1 bis 7, bei dem wenigstens eines der durchgehenden Bänder (7, 71, 72, 73, 74), die eine Dichtung bilden, auf einer der Hauptflächen zwischen zwei durchgehenden eingetieften Zonen (88.1, 88.2) angeordnet ist.

9. Rahmen zur Abdichtung und elektrischen Isolation nach einem der vorstehenden Ansprüche, bei dem die Tiefe der durchgehenden eingetieften Zonen (88, 88.1, 88.2) des Teils (8) aus elektrisch isolierendem Material in der Richtung senkrecht zu der durch die Achsen (X, Y) definierten Ebene zwischen 0,05 und 1 mm beträgt.

10. Elektrolysereaktor (EHT) vom TYP SOEC oder Brennstoffzelle von Typ SOFC mit einer Säule elektrochemischer Festoxid-Elementarzellen (C1, C2, C3), von denen jede durch eine Kathode (2.1, 2.2, ...), eine Anode (4.1, 4.2) und einen zwischen der Kathode und der Anode eingefügten Elektrolyten (3.1, 3.2) gebildet wird, mehreren Rahmen zur Abdichtung und elektrischen Isolation nach einem der vorstehenden Ansprüche, deren Träger (85) eine der elektrochemischen Elementarzellen trägt, mehreren elektrischen Kontaktelementen (9), die jeweils in direktem Kontakt mit einer Anode oder einer Kathode einer der elektrochemischen Elementarzellen angeordnet sind, und mehreren elektrischen Verbindern und Fluidverbindern (5), die jeweils durch ein einziges ebenes und von vier Öffnungen durchbrochenes Metallblech gebildet werden, wobei die Verbinder jeweils in Kontakt mit zwei benachbarten Rahmen zur elektrischen Isolation und mit ihren vier Öffnungen gegenüberliegend zu den entsprechenden Öffnungen dieser benachbarten Rahmen angeordnet sind und mit zwei benachbarten elektrischen Kontaktelementen (9) in Kontakt stehen, von denen eines in elektrischem Kontakt mit der Kathode (2.1) einer der beiden Elementarzellen (C1) steht und das andere in elektrischem Kontakt mit der Anode (4.2) oder der Kathode der anderen der beiden Elementarzellen (C2) steht.

11. Elektrolysereaktor vom Typ SOEC oder Brennstoffzelle vom Typ SOFC nach Anspruch 10, bei dem jedes ebene Metallblech, das einen Verbinder (5) bildet, aus ferritischem Stahl mit etwa 20% Chrom ist, vorzugsweise aus CROFER®22APU oder FT18TNb, auf der Basis von Nickel des Typs Inconel®600 oder Haynes®.

12. Elektrolysereaktor vom Typ SOEC oder Brennstoffzelle vom Typ SOFC nach Anspruch 10 oder 11, bei dem jedes Blech eine Dicke zwischen 0,1 und 1 mm hat.

13. Elektrolysereaktor vom Typ SOEC oder Brennstoffzelle vom Typ SOFC nach einem der Ansprüche 10 bis 12, bei dem die elementaren Elektrolysezellen vom Typ mit Kathodenträger sind.

14. Elektrolysereaktor vom Typ SOEC oder Brennstoffzelle vom Typ SOFC nach einem der Ansprüche 10 bis 13, bei dem die elektrischen Kontaktelemente (9) durch Metalldrähte oder ein Metallgitter oder ein getieftes Blechteil gebildet sind.

## Claims

1. Device forming a sealing frame providing electric insulation for gas distribution in a SOEC type high-temperature steam electrolyser or in a SOFC type fuel cell, the device comprising:
- a part (8) in electric insulating material lying along two axes of symmetry (X, Y) at right angles to each other and pierced by a central opening (80), the peripheral edge of which constitutes a support (85) for a SOEC or SOFC electrochemical cell (C1, C2, etc.) formed by a cathode (2), an anode (4) and an electrolyte (3) inserted between the cathode and the anode, the part also being pierced by four peripheral openings (81, 82, 83, 84) opposite each other in pairs on the periphery of its central opening, two of the peripheral openings (83, 84) lying along a length more or less corresponding to the length of the central opening (80) according to one of the axes X and distributed on either side of this axis X, whereas the other two peripheral openings (81, 82) are lying along a length more or less corresponding to the length of the central opening according to the other of the axes Y and distributed on either side of this axis Y, on one of its principal faces the part also comprising ribs (86) defining gas distribution channels (87) connecting each of the two peripheral openings (83, 84) lying along the axis X on the central opening and on its opposite principal face ribs (86) defining gas distribution channels (87) connecting each of the two peripheral openings (81, 82) lying along the axis Y on the central opening, on each of its principal faces the part also comprising at least three continuous, hollow areas (88), one of which is on the periphery of the central opening, the ribs and the two openings connected to the central opening at the same time and each of the two others of which is on the periphery of one of the peripheral openings not connected to the central opening;
- seals in the form of continuous strands, one of which (7) is deposited on the support of the cell and the others of which (71, 72, 73, 74) are deposited individually in or along each of the continuous, hollow areas.

2. Sealing frame providing electric insulation according to claim 1, in which the part in electric insulating material is based on mica.

3. Sealing frame providing electric insulation according to claim 1, in which the part in electric insulating material (8) is obtained from a raw and sintered ceramic strip.

4. Sealing frame providing electric insulation according to claim 1 to 3, in which the reliefs of the part (8) in electric insulating material constituted by the support (85), ribs (86), channels (87) and hollow areas (88) are pressed.

5. Sealing frame providing electric insulation according to one of the previous claims, in which the seals (7, 71, 72, 73, 74) in the form of a continuous strand are based on glass or vitreous ceramic.

6. Sealing frame providing electric insulation according to one of the previous claims, in which the thickness of the part (8) in electric insulating material is between 0.1 and 2 mm.

7. Sealing frame providing electric insulation according to one of the previous claims, in which at least one continuous strand (7, 71, 72, 73, 74) forming a seal is deposited in a continuous, hollow area (88).

8. Sealing frame providing electric insulation according to one of claims 1 to 7, in which at least one continuous strand (7, 71, 72, 73, 74) forming a seal is deposited on one of the principal faces between two continuous, hollow areas (88.1, 88.2).

9. Sealing frame providing electric insulation according to one of the previous claims, in which the depth of the continuous, hollow areas (88, 88.1, 88.2) of the part (8) in electric insulating material in the direction at right angles to the plane defined by the axes (X, Y) is between 0.05 and 1 mm.

10. SOEC type electrolysis reactor (high-temperature reactor) or SOFC type fuel cell comprising a stack of elementary solid oxide electrochemical cells (C1, C2, C3), each formed by a cathode (2.1, 2.2..), an anode (4.1, 4.2) and an electrolyte (3.1, 3.2) inserted between the cathode and the anode, a plurality of sealing frames providing electric insulation according to one of the previous claims, the support of which (85) supports one of the elementary electrochemical cells, a plurality of electric contact elements (9), each arranged in direct contact with an anode or a cathode of an elementary electrochemical cell, and a plurality of electric and fluid interconnectors (5), each constituted by a single flat metal sheet and pierced by four openings, the interconnectors each being arranged in contact with two adjacent electric insulating frames and with their four openings opposite the openings corresponding to these adjacent frames, in contact with two adjacent electric contact elements (9), one of which is in electric contact with the cathode (2.1) of one of the two elementary cells (C1) and the other of which is in electric contact with the anode (4.2) or the cathode of the other of the two elementary cells (C2).

11. SOEC type electrolysis reactor or SOFC type fuel cell according to claim 10, in which each flat metal sheet constituting an interconnector (5) is in about 20% chrome ferritic steel, preferably CROFER® 22APU or FT18TNb, Inconel® 600 or Haynes® type based on nickel.

12. SOEC type electrolysis reactor or SOFC type fuel cell according to claim 10 or 11, in which each sheet has a thickness of between 0.1 and 1 mm.

13. SOEC type electrolysis reactor or SOFC type fuel cell according to one of claims 10 to 12, in which the elementary electrolysis cells are of the cathode support type.

14. SOEC type electrolysis reactor or SOFC type fuel cell according to one of claims 10 to 13, in which the electric contact elements (9) are constituted by metal wires or a metal grille or a pressed sheet part.
